# EUROPÄISCHE PATENTSCHRIFT

(11) **EP 1 761 354 B1**
(45) Veröffentlichungstag und Bekanntmachung des Hinweises auf die Patenterteilung: **27.09.2017**
(21) Anmeldenummer: 05757293.5
(22) Anmeldetag: 14.06.2005
(51) Int. Cl.: B23B 31/00, B23B 31/02, B23P 11/02

(54) **WERKZEUGHALTER FÜR EIN ROTATIONSWERKZEUG**
TOOL HOLDER FOR A ROTATING TOOL
PORTE-OUTILS POUR UN OUTIL ROTATIF

(30) Priorität: 14.06.2004 DE 102004028682; 03.09.2004 DE 102004042770
(43) Veröffentlichungstag der Anmeldung: 14.03.2007
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Weickmann & Weickmann PartmbB
(86) Internationale Anmeldenummer: PCT/EP2005/006365
(87) Internationale Veröffentlichungsnummer: WO 2005/120751

(56) Entgegenhaltungen:
- FR-A- 2 489 189
- US-A- 2 610 066
- US-A- 5 301 961

## Beschreibung

Die Erfindung betrifft einen Werzeughalter für ein Rotationswerkzeug.

In der Praxis werden zum Spannen von rotierenden Werkzeugen, wie z.B. Bohrern oder Fräsern oder dergleichen vielfach Werkzeughalter benutzt, deren den Schaft des Rotationswerkzeugs im radialen Presssitz haltende Spannmittel einen nur geringen maximalen Hub haben. Es gilt die Regel, dass die Präzision und Rundlaufgenauigkeit des Werkzeughalters umso größer ist, je kleiner der Spannhub ist. So haben Präzisions-Zangenspannfutter einen Spannhub von nur einigen wenigen Millimetern, während sonstige Präzisions-Spannfutter, wie zum Beispiel Hydro-Dehnspannfutter oder mechanische Spannfutter mit ringförmig geschlossenen Spannmitteln, insbesondere aber Werkzeughalter vom Schrumpffuttertyp so ausgebildet sind, dass Rotationswerkzeuge mit lediglich einem einzigen Schaft-Nenndurchmesser in dem Werkzeughalter direkt gespannt werden können.

Mit den vorstehend erläuterten Werkzeughaltern lassen sich hinreichend hohe Presssitzkräfte erreichen. Es hat sich jedoch gezeigt, dass die rotierenden Schneidflächen der Werkzeuge Schwingungen anregen, die im Schnittflächenbild des bearbeiteten Werkstücks Ratterspuren oder dergleichen hinterlassen. Dies begrenzt die erreichbare Vorschubgeschwindigkeit der Werkzeugmaschine.

Es hat sich auch gezeigt, dass Rotationswerkzeuge, die bei schwingungsfreiem Betrieb hinreichend fest in dem Werkzeughalter sitzen beim Auftreten von Schwingungen in dem Werkzeughalter axial zu wandern beginnen und sich gegebenenfalls im Betrieb vom Werkzeughalter lösen.

Aus US 5 301 961 ist ein Zangenspannfutter bekannt, dessen den Werkzeugschaft aufnehmender Aufnahmeabschnitt in einer Aufnahmeöffnung eine Spannhülse mit drei in Achsrichtung des zu spannenden Werkzeugschafts hintereinander angeordneten Zentrierringen umfasst. Die Zentrierringe sind einteilig durch Federbereiche miteinander verbunden, die bei axialer Belastung der Spannhülse den in die Spannhülse eingreifenden Werkzeugschaft in radialem Presssitz in dem Aufnahmeabschnitt des Zangenspannfutters fixieren. Die Querschnittsform der Federabschnitte ist durch zwei am Innenumfang der Spannhülse eingeformte Ringnuten und eine axial zwischen den inneren Ringnuten am Außenumfang der Spannhülse eingeformte Ringnut definiert. Die Spannhülse überträgt Presssitzkräfte ausschließlich im Bereich der Federabschnitte.

Unter einem ersten Aspekt ist es Aufgabe der Erfindung, einen Werkzeughalter zu schaffen, der axiales Wandern des Rotationswerkzeugs während des Betriebs besser als bisher verhindert. Unter einem zweiten Aspekt ist es Aufgabe der Erfindung von dem Rotationswerkzeug angeregte Schwingungen besser als bisher zu dämpfen.

Diese Aufgabe wird durch die im Patentanspruch 1 angegebenen Merkmale gelöst.

Die Erfindung geht von einem Werkzeughalter aus, dessen Aufnahmeabschnitt für die Halterung eines Schafts eines Rotationswerkzeugs zentrisch zu einer Drehachse des Werkzeughalters vorgesehene Spannmittel umfasst, die eine Aufnahmeöffnung für den Schaft definieren, wobei die Spannmittel zwischen einer radial aufgeweiteten Lösestellung zum Einsetzen oder Entnehmen des Schafts und einer Spannstellung in der die Spannmittel radiale, den Schaft an seiner kreiszylindrischen äußeren Umfangsfläche im Reibschluss haltende Presssitzkräfte auf den Schaft ausüben, radial verstellbar sind, und wobei den Spannmitteln eine Spannfläche mit kreiszylindrischer Kontur zugeordnet ist, die in der Spannstellung flächig an der äußeren Umfangsfläche des Schafts anliegt. Solche Werkzeughalter sind, wie eingangs erläutert, als Präzisions-Werkzeughalter, beispielsweise vom Schrumpffuttertyp bekannt geworden.

Hierbei ist vorgesehen, dass der die Spannfläche bildende Bereich des Werkzeughalters eine Vielzahl um die Drehachse herum gekrümmter Nutabschnitte in axialem Abstand voneinander aufweist, die, - in Richtung der Drehachse gesehen - zwischen sich einstückig miteinander verbundene und in axialem Abstand voneinander angeordnete, zur Drehachse hin vorstehende Stützbereiche begrenzen, deren zur Drehachse hin gelegene Dachflächen die kreiszylindrische Spannfläche bilden.

Die Dachflächen der Stützbereiche folgen einer kreiszylindrischen Kontur und sind insgesamt so groß bemessen, dass das für den Betrieb erforderliche Drehmoment die Presssitzkräfte der Spannmittel übertragen werden kann. Da die Stützbereiche jedoch aufgrund der Nutabschnitte axial frei stehen, sind die Stützbereiche, verglichen mit herkömmlichen, die Stützfläche bildenden Bereichen von Werkzeughaltern in gewissem Umfang axial elastisch und können Biegeschwingungen des Aufnahmeabschnitts des Werkzeughalters relativ zum Schaft des Rotationswerkzeugs ausgleichen und dämpfen. Die Neigung des Werkzeugschafts aus der Aufnahmeöffnung herauszuwandern, wird beträchtlich verringert.

Die Nutabschnitte sind zweckmäßigerweise durch wenigstens eine um die Drehachse herum gekrümmte Wendelnut oder durch eine Vielzahl in axialem Abstand voneinander angeordnete, die Drehachse umschließende Ringnuten gebildet. Soweit es sich um Ringnuten handelt, wird eine rotationssymmetrische Stützbereichstruktur erzeugt, die sich durch besonders hohe axiale Festhaltekräfte auszeichnet. Die Erzeugung der Stützbereichstruktur mit Hilfe einer oder mehrerer axial gegeneinander versetzter Ringwendel ist besonders einfach nach Art eines Gewindeschneidvorgangs herstellbar. Werden zwei gegenläufige Wendelnuten geschnitten, so wird auch hier eine rotationssymmetrische Stützbereichstruktur erreicht.

Die vorstehend erläuterten Wendelnuten bzw. Ringnuten erzeugen die Drehachse wendelförmig oder ringförmig umschließende, stegartige Stützbereiche. In einer Variante kann jedoch auch vorgesehen sein, dass der die Spannfläche bildende Bereich des Werkzeughalters eine Vielzahl allseitig im Abstand voneinander angeordnete Stützbereiche in Form von durch die Nutabschnitte allseitig voneinander getrennter, jedoch einstückig miteinander verbundener Noppen aufweist, deren zur Drehachse hin vorstehende Dachflächen wiederum die kreiszylindrische Spannfläche bilden. Im Unterschied zur vorangegangen erläuterten Ausführungsform lassen sich durch die Noppen die radialen bzw. axialen Elastizitätseigenschaften des die Spannfläche bildenden Bereichs des Werkzeughalters besser beeinflussen.

Noppen der vorstehend erläuterten Art lassen sich relativ einfach herstellen, wenn die Stützbereiche längs der Spannfläche durch wenigstens zwei Gruppen von Nutabschnitten begrenzt sind, wobei die Nutabschnitte jeder Gruppe innerhalb der Spannfläche ohne sich zu kreuzen im Abstand nebeneinander verlaufen und sich die Nutabschnitte verschiedener Gruppen innerhalb der Spannfläche zur Bildung der Stützbereiche kreuzen. Beispielsweise können die Nutabschnitte einer ersten Gruppe durch wenigstens eine um die Drehachse herum gekrümmte Wendelnut und die Nutabschnitte einer zweiten Gruppe durch wenigstens eine gegensinnig zur wenigstens einen Wendelnut der ersten Gruppe oder mit anderer Steigung als die wenigstens eine Wendelnut der ersten Gruppe um die Drehachse herum gekrümmte Wendelnut oder/und eine Vielzahl die Drehachse umschließender, in axialem Abstand voneinander angeordneter Ringnuten oder/und eine Vielzahl in Umfangsrichtung der Spannfläche verteilt angeordneter, axial sich erstreckender Nuten gebildet sein. Wendelnuten, Ringnuten oder axiale Nuten lassen sich mit Hilfe von Werkzeugmaschinen relativ einfach herstellen. In einer Variante kann aber auch vorgesehen sein, dass die Nutabschnitte einer ersten Gruppe durch eine Vielzahl die Drehachse umschließender, in axialem Abstand voneinander angeordneter Ringnuten und die Nutabschnitte einer zweiten Gruppe durch wenigstens eine um die Drehachse herum gekrümmte Wendelnut oder/und eine Vielzahl in Umfangsrichtung der Spannfläche verteilt angeordneter, axial sich erstreckender Nuten gebildet sind.

Die Dachflächen der Stützbereiche folgen - gesehen im Axiallängsschnitt des Aufnahmeabschnitts - zusammen mit axial seitlich der Dachfläche anschließenden Nutseitenflächen zweckmäßigerweise einer Rechteckkontur oder einer Parallelogrammkontur oder einer Trapezkontur. Zumindest eine der Nutseitenflächen einer Vielzahl benachbarter Stützbereiche, insbesondere beide Nutseitenflächen verlaufen zweckmäßigerweise rechtwinklig zur Drehachse; eine oder beide Nutseitenflächen kann aber auch Konusform haben. Durch geeignete Wahl der Neigungswinkel lässt sich das Dämpfungsverhalten der Stützbereichstruktur verändern.

Verjüngen sich beide konischen Nutseitenflächen in Richtung der Drehachse gleichsinnig, so entstehen relativ zur Drehachse geneigt verlaufende Stützbereiche die, wenn sich die Nutseitenflächen vom Rotationswerkzeug weg verjüngen, die auf den Werkzeugschaft ausgeübten Presssitzkräfte für die Auswärtsbewegung des Schafts verstärken. Zweckmäßigerweise sind zwei Gruppen mit je einer Vielzahl axial benachbarter Stützbereiche vorgesehen, deren konusförmige Nutseitenflächen sich gleichsinnig verjüngen, wobei sich die konusförmigen Nutseitenflächen in den beiden Gruppen gegensinnig verjüngen. Axiales Wandern des Werkzeugschafts bei Biegeschwingungen des Werkzeughalters wird hier besonders gut verhindert, insbesondere wenn sich die konusförmigen Nutseitenflächen der beiden Gruppen aufeinander zu verjüngen.

Die Breite der wenigstens einen Wendelnut oder die Breite jeder Ringnut bezogen auf die Breite der Dachfläche zwischen benachbarten Windungen der Wendelnut bzw. zwischen benachbarten Ringnuten beeinflusst das Dämpfungsverhalten und das Beharrungsvermögen des in dem Werkzeughalter gespannten Werkzeugschafts. Bevorzugt ist die Breite der Wendelnut bzw. der Ringnut kleiner als die Breite der Dachfläche des dazwischen verbleibenden Stützbereichs. Je kleiner die Nutbreite ist, desto größer ist die für die Übertragung der Presssitzkräfte verbleibende Spannfläche. Die Breite der Dachfläche hingegen beeinflusst zusammen mit dem Neigungswinkel der Nutseitenflächen die schwingungsdämpfenden Eigenschaften der Stützbereiche. Auch hat sich erwiesen, dass die radiale Tiefe der wenigstens einen Wendelnut oder die Tiefe jeder Ringnut zweckmäßigerweise größer ist als die Breite der Wendelnut bzw. die Breite der Ringnut, um eine für die Dämpfungseigenschaften hinreichende Axialelastizität der Stützbereiche sicherzustellen.

Die beispielsweise durch Wendelnuten, Ringnuten oder axiale Nuten gebildeten Nutabschnitte können zur Aufnahmeöffnung hin offen liegen. In einer bevorzugten Ausgestaltung können jedoch die Nutabschnitte zumindest auf einem Teil ihrer Längserstreckung, insbesondere jedoch im Wesentlichen auf ihrer ganzen Länge, mit einem vom Material des die Spannfläche bildenden Bereichs des Werkzeughalters verschiedenen Material ausgefüllt sein. Die Füllung kann unterschiedlichen Zwecken dienen. Beispielsweise kann die Füllung für eine flüssigkeitsdichte Abdichtung insbesondere bei Wendelnuten oder Axialnuten dienen. Die Füllung kann jedoch auch zur Verbesserung der Schwingungsdämpfung ausgenutzt werden oder aber sie kann, zum Beispiel bei einem Werkzeughalter vom Schrumpffuttertyp, für eine thermische Isolierung des Werkzeugschafts während des Schrumpfvorgangs sorgen. Das Füllmaterial kann aus Kunststoff oder Keramik oder Metall bestehen.

Erfindungsgemäß können die zum Beispiel als Wendelnuten bzw. Ringnuten ausgebildeten Nutabschnitte unmittelbar in das Material des Aufnahmeabschnitts des Werkzeughalters eingeformt werden. Bei einem Werkzeughalter vom Schrumpffuttertyp können sie unmittelbar in den die Aufnahmeöffnung für den Aufnahmeschaft bildenden, wärmedehnbaren Hülsenabschnitt eingeformt werden. Alternativ kann die Stützbereich- oder -elementstruktur aber auch in eine gegebenenfalls gesonderte, radial elastische Buchse eingeformt sein, die ihrerseits in die Aufnahmeöffnung des Werkzeughalters eingesetzt wird und die die radialen Presssitzkräfte der Spannmittel des Werkzeughalters auf den Werkzeugschaft überträgt. Eine solche Buchse kann als Durchmesserausgleichsbuchse verwendet werden, mittels der ein zum Spannen lediglich eines einzigen Schaft-Nenndurchmessers bestimmter Werkzeughalter auch für andere, wenn auch kleinere Schaftdurchmesser verwendet werden kann. Insbesondere bei einem Werkzeughalter vom Schrumpffuttertyp erleichtert eine solche Buchse aber auch den maximal erreichbaren Spannhub. In einer solchen Ausgestaltung ist vorgesehen, dass die zum Beispiel als Wendelnuten oder als Ringnuten ausgebildeten Nutabschnitte in einer die kreiszylindrisch konturierte Spannfläche bildenden, inneren Umfangsfläche einer radial elastischen, den Schaft des Rotationswerkzeugs aufnehmenden Buchse vorgesehen sind, und dass die Spannmittel eine weitere, die Aufnahmeöffnung definierende, zwischen der Lösestellung und der Spannstellung radial verstellbare Spannfläche aufweisen, wobei in der Lösestellung der Spannmittel zum einen die Buchse in die Aufnahmeöffnung einsetzbar oder aus ihr entnehmbar ist oder/und zum anderen der Schaft in die Buchse einsetzbar oder aus ihr entnehmbar ist und in der Spannstellung die Buchse die radialen Presssitzkräfte der Spannmittel auf den Schaft überträgt. Bei der Buchse kann es sich um eine gesondertes, aus dem Werkzeughalter entnehmbares Bauteil handeln; wie nachfolgend noch erläutert wird, kann die Buchse aber auch fest mit dem Werkzeughalter verbunden oder aber integral an ihm angeformt sein.

Die Buchse weist bevorzugt wenigstens eine axial sich erstreckende Ausgleichsfuge, vorzugsweise jedoch mehrere solcher Ausgleichsfugen in Umfangsrichtung verteilt auf, um hinreichend radial elastische Eigenschaften zu erzielen und die von den Spannmitteln ausgeübten Presssitzkräfte möglichst wenig zu schwächen. Bei den Ausgleichsfugen kann es sich um axial sich erstreckende Nuten oder radial die Buchse durchdringende axiale Schlitze handeln. Insbesondere können sowohl an der inneren Umfangsfläche als auch an der äußeren Umfangsfläche Nuten vorgesehen sein, um durch die so entstehende meanderförmige Querschnittstruktur besonders gute radial elastische Eigenschaften zu erreichen.

Der Spannhub von Präzisions-Werkzeughaltern, insbesondere von Werkzeughaltern vom Schrumpffuttertyp setzt normalerweise in engen Toleranzgrenzen gehaltene Schaftdurchmesser voraus. Um auch bei Verwendung von Durchmesserausgleichsbuchsen den Spannhub möglichst gut ausnutzen zu können, ist in einer bevorzugten Ausgestaltung vorgesehen, dass die Buchse zwei koaxial ineinander angeordnete Hülsen umfasst, von denen die äußere Hülse eine konische Innenfläche hat und von denen die innere Hülse eine an der konischen Innenfläche der äußeren Hülse anliegende konische Außenfläche und eine die Spannfläche der Buchse bildende kreiszylindrisch konturierte Innenfläche hat, deren Innendurchmesser durch axiales Verschieben der inneren Hülse und der äußeren Hülse relativ zueinander bis zur Anlage der Spannfläche an den Schaft änderbar ist. Eine solche Buchse erlaubt die Überbrückung von Durchmesserdifferenzen zwischen dem Außendurchmesser des Werkzeugschafts und dem Nenn-Innendurchmesser des Werkzeughalters einschließlich des Ausgleichs von Durchmessertoleranzen des Werkzeugschafts. Die zweiteilige Buchse wird hierzu zunächst auf den Werkzeugschaft aufgeschoben und durch Verstellen der inneren Hülse relativ zur äußeren Hülse in einem gewissen Klemmsitz auf dem Werkzeugschaft fixiert. Die Klemmkräfte müssen jedoch noch nicht die für die Übertragung des Betriebsdrehmoments erforderliche Größe haben, denn die hierfür erforderlichen Presssitzkräfte werden nachfolgend von den Spannmitteln des Werkzeughalters über die Buchse auf den Werkzeugschaft ausgeübt. Auch bei der zweiteiligen Buchse können als axial sich erstreckende Nuten oder Schlitze ausgebildete Ausgleichsfugen zumindest an der inneren Hülse, vorzugsweise aber auch an der äußeren Hülse zur Verbesserung der radial elastischen Eigenschaften vorgesehen sein.

Die äußere Umfangsfläche der Buchse kann kreiszylindrische Kontur haben. Um jedoch die Buchse axial definiert in dem Werkzeughalter positionieren zu können, was insbesondere bei auch axialer Wärmedehnung unterworfenen Werkzeughaltern vom Schrumpffuttertyp von Bedeutung ist, kann entsprechend einer bevorzugten Ausgestaltung vorgesehen sein, dass die vorstehend erwähnte weitere Spannfläche der Spannmittel als konische Innenfläche ausgebildet ist und die Buchse eine an der konischen Innenfläche anliegende, konische Außenfläche hat, die sich entsprechend der konischen Innenfläche in Richtung der Drehachse zum Rotationswerkzeug hin verjüngt. Auf der dem Rotationswerkzeug axial abgewandten Seite des Bereichs ihrer Spannfläche ist die Buchse axial an dem Werkzeughalter abgestützt. Beim Übergang von der Lösestellung zur Spannstellung ziehen die Spannmittel die Buchse selbsttätig axial gegen die beispielsweise als axiale Anschlagschulter ausgebildeten Abstützflächen des Werkzeughalters.

Bei einem Werkzeughalter vom Schrumpffuttertyp kann dieser zur Bildung der Spannmittel einen durch Erwärmen in die Lösestellung und durch Abkühlen in die Spannstellung überführbaren, die konische Innenfläche der weiteren Spannfläche bildenden Hülsenabschnitt aufweisen, der die konische Außenfläche der Buchse umschließt und auf der dem Rotationswerkzeug axial abgewandten Seite der durch die innere Umfangsfläche der Buchse gebildeten Spannfläche fest mit dem Werkzeughalter verbunden ist. Ein solcher Hülsenabschnitt erzeugt nicht nur radiale Presssitzkräfte, sondern erzeugt beim Abkühlen auch axiale Kräfte, die einerseits nach Art einer Spannzange die Buchse radial belasten und andererseits die Buchse axial gegen ihre Abstützfläche pressen. Mit Hilfe eines solchen Werkzeughalters lassen sich hohe Presssitzkräfte bei exakter Positionierung erreichen.

Von besonderer Bedeutung sind Ausgestaltungen, bei welchen der Hülsenabschnitt auf der dem Rotationswerkzeug axial abgewandten Seite eine axial über den die weitere Spannfläche bildenden Bereich axial hinausreichende, den Werkzeughalter oder/und die Buchse mit radialem Abstand umschließende Verlängerung aufweist, deren Endbereich mit dem Werkzeughalter fest verbunden ist. Beim Übergang von der Lösestellung zur Spannstellung verkürzt sich der axial schrumpfende Hülsenabschnitt und erzeugt bleibende, auf die Buchse wirkende axiale Spannkräfte die im Betrieb erzeugte Schwingungen, insbesondere Biegeschwingungen dämpfen. Die Dämpfungswirkung beruht nicht zuletzt auf der kombinierten reib- und formschlüssigen Einspannung des Hülsenabschnitts am konischen äußeren Umfang der Buchse.

Von besonderem Vorteil ist ferner eine Verbesserung, bei der der Hülsenabschnitt aus einem Material besteht, dessen Wärmeausdehnungskoeffizient größer ist als der Wärmeausdehnungskoeffizient der Buchse oder/und des von dem Hülsenabschnitt umschlossenen Bereichs des Werkzeughalters. Die erhöhte Wärmedehnfähigkeit des Hülsenabschnitts vergrößert einerseits den Spannhub des Werkzeughalters und erhöht andererseits die zur Schwingungsdämpfung erwünschten axialen Spannkräfte in der Spannstellung.

Um den Werkzeughalter in die Lösestellung zu überführen, kann der Hülsenabschnitt lediglich im Bereich der Buchse erwärmt werden; er kann aber auch über seine gesamte Länge erwärmt werden, um den Öffnungshub zu erhöhen. Als vorteilhaft hat es sich erwiesen, wenn die Buchse an ihrem dem Rotationswerkzeug abgewandten Ende fest mit dem Werkzeughalter verbunden ist und der Hülsenabschnitt im Wesentlichen ausschließlich im Bereich seiner Verlängerung für die Überführung in die Lösestellung erwärmt wird. Herkömmliche Werkzeughalter vom Schrumpffuttertyp werden üblicherweise im Bereich der den Werkzeugschaft spannenden Spannflächen beispielsweise induktiv erwärmt. Hierzu muss dafür Sorge getragen werden, dass sich lediglich der Hülsenabschnitt, nicht jedoch auch der Werkzeugschaft mit erwärmt, was ansonsten das Ausspannen des Werkzeugs erschweren würde. Wird hingegen der Hülsenabschnitt lediglich im Bereich der Verlängerung und damit axial außerhalb der den Werkzeugschaft haltenden Spannflächen erwärmt, so treten keine das Ausspannen erschwerende Klemmeffekte auf.

Im Folgenden werden Ausführungsbeispiele der Erfindung anhand von Zeichnungen näher erläutert. Hierbei zeigt:
Fig. 1 einen Axiallängsschnitt durch einen Werkzeughalter vom Schrumpffuttertyp mit einer erfindungsgemäßen Stützelementstruktur;
Fig. 2 einen Axiallängsschnitt durch den Werkzeughalter mit einer ersten Variante der Stützelementstruktur;
Fig. 3 einen Axiallängsschnitt durch einen Werkzeughalter mit einer zweiten Variante der Stützelementstruktur;
Fig. 4 einen Axiallängsschnitt durch den Werkzeughalter mit einer die Stützelementstruktur bildenden Buchse;
Fig. 5 eine Axialansicht der Buchse des Werkzeughalters aus Fig. 4;
Fig. 6 einen Axiallängsschnitt durch den Werkzeughalter mit einer Variante der die Stützelementstruktur enthaltenden Buchse;
Fig. 7 einen Axiallängsschnitt durch eine Variante des Werkzeughalters aus Fig. 6;
Fig. 8 einen Axiallängsschnitt durch eine Variante des Werkzeughalters aus Fig. 7;
Fig. 9 eine Axialansicht der in dem Werkzeughalter gemäß Fig. 8 enthaltenen Buchse;
Fig. 10 einen Axiallängsschnitt durch einen Werkzeughalter vom Schrumpffuttertyp mit einer Durchmesserausgleichsbuchse;
Fig. 11 einen Axiallängsschnitt durch einen Werkzeughalter mit einer dritten Variante der Stützelementstruktur;
Fig. 12 einen Axiallängsschnitt durch einen Werkzeughalter mit einer Variante der Stützelementstruktur der Fig. 11, gesehen entlang einer Linie XII-XII in Fig. 13;
Fig. 13 eine Axialansicht des Werkzeughalters aus Fig. 12;
Fig. 14 einen Axiallängsschnitt durch einen Werkzeughalter mit einer vierten Variante der Stützelementstruktur und
Fig. 15 einen Axiallängsschnitt durch einen Werkzeughalter mit einer Variante der Stützelementstruktur aus Fig. 14.

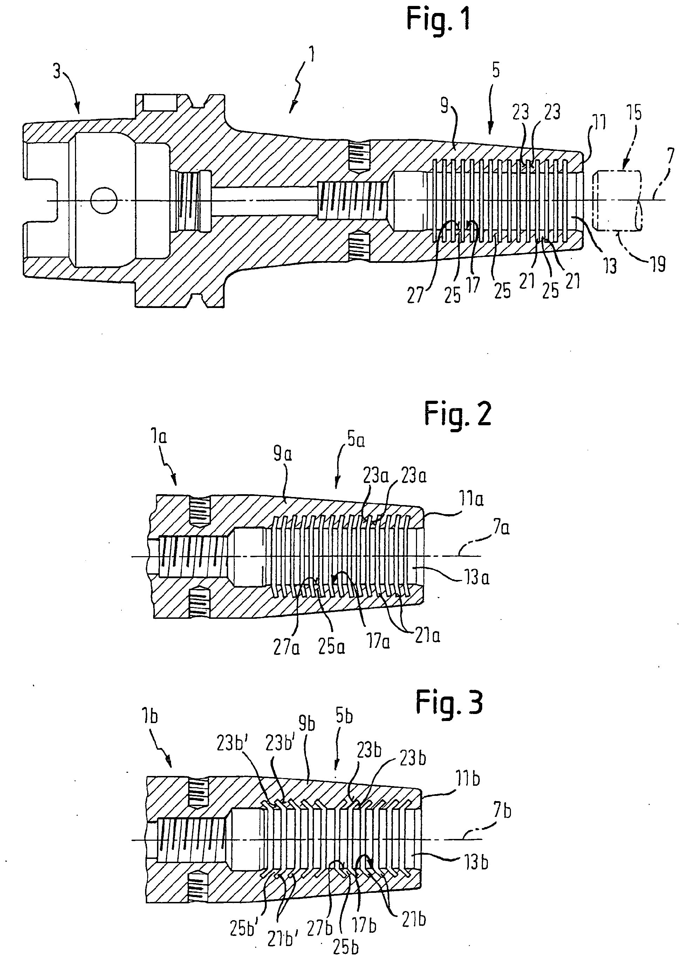

Fig. 1 zeigt einen Werkzeughalter 1 vom Schrumpffuttertyp mit einem Kupplungsabschnitt 3, hier in Form eines Hohlschaftkegels (HSK), für die drehfeste Kupplung mit einer Arbeitsspindel einer Werkzeugmaschine an seinem axial einen Ende und einem Aufnahmeabschnitt 5 an seinem axial anderen Ende. Die Drehachse des Werkzeughalters 1 ist bei 7 dargestellt. Der Kupplungsabschnitt 3 kann beliebige Gestalt haben, also auch die Form eines Steilkegels oder dergleichen. Der Aufnahmeabschnitt 5 hat die prinzipielle Form einer Hülse 9, die in einer senkrecht zur Drehachse 7 verlaufenden Stirnfläche 11 endet und eine kreiszylindrische, zur Drehachse 7 zentrische Aufnahmeöffnung 13 enthält, in die ein nicht näher dargestelltes Rotationswerkzeug, beispielsweise ein Fräser oder Bohrer, mit seinem kreiszylindrischen Werkzeugschaft 15 in nachfolgend noch näher erläuterter Weise auswechselbar eingreift. Fig. 1 zeigt den Werkzeugschaft 15 der Übersichtlichkeit halber vor dem Einsetzen in die Aufnahmeöffnung 13, in der er reibschlüssig durch radiale, von der eine Spannfläche 17 bildenden, inneren Umfangsfläche der Hülse 9 im Presssitz gehalten wird.

Der Außendurchmessser der äußeren Umfangsfläche 19 des Werkzeugschafts 15 ist etwas größer bemessen als der Innendurchmesser der Spannfläche 17. Bei Erwärmung des Aufnahmeabschnitts 5, beispielsweise mittels eines induktiven Schrumpfgeräts der in WO 01/89758A1 beschriebenen Art, dehnt sich die Aufnahmeöffnung 13 so weit auf, dass der Werkzeugschaft 15 in die wärmegedehnte Aufnahmeöffnung 13 eingesteckt werden kann. Nach dem Abkühlen übt die Hülse 9 des Aufnahmeabschnitts 5 radiale Presskräfte auf den Werkzeugschaft 15 aus und fixiert diesen in dem Aufnahmeabschnitt 5. Um den Werkzeugschaft 15 aus dem Werkzeughalter 1 wieder ausspannen zu können, wird der Aufnahmeabschnitt 5 erneut erwärmt, bis dieser den Werkzeugschaft 15 freigibt.

Im Betrieb des in den Werkzeughalter 1 eingespannten Rotationswerkzeugs können Schwingungen, insbesondere Biegeschwingungen, auftreten. Um zu verhindern, dass der Werkzeugschaft 15 auf Grund der Schwingungen axial aus der Aufnahmeöffnung 13 herauswandert, enthält die Hülse 9 im Bereich der Spannfläche 17 eine Vielzahl Nutabschnitte in Form von Ringnuten 21, die mit axialem Abstand nebeneinander in die Spannfläche 17 der Hülse 9 eingeformt sind. Die Ringnuten 21 haben zueinander parallele, achsnormale Seitenflächen 23, die zwischen benachbarten Ringnuten 21 Stützelemente 25 in Form ringförmiger Rippen begrenzen. Die Stützelemente 25 haben Dachflächen 27, die in ihrer Vielzahl die Spannfläche 17 bilden.

Da axial benachbarte Stützelemente 25 jeweils durch eine der Ringnuten 21 voneinander getrennt sind, sind sie in gewissem Umfang axial elastisch und können axiale Dehnungsunterschiede zwischen dem Werkzeugschaft 15 und der Hülse 9 ausgleichen. Durch geeignete Wahl der radialen Tiefe der Ringnuten 21, bezogen auf die axiale Breite der Stützelemente 25 einerseits und die axiale Breite der Ringnuten 21, bezogen auf die axiale Breite der Stützelemente 25 andererseits, können die Schwingungseigenschaften und damit die Dämpfungseigenschaften des Aufnahmebereichs 5 des Werkzeughalters 1 beeinflusst werden. Zweckmäßigerweise ist die radiale Tiefe der Ringnuten 21 größer als die axiale Breite der Dachflächen 27 und bevorzugt auch größer als die axiale Breite der Ringnuten 21, um einerseits die Spannfläche 17 nicht allzusehr zu schwächen und andererseits für eine hinreichende axiale Elastizität der Stützelemente 25 zu sorgen. Bevorzugt ist auch die Breite der Ringnuten 21 kleiner als die Breite der Dachfläche 27 zwischen benachbarten Ringnuten 21, um für eine hinreichend große Spannfläche 17 zu sorgen.

Im Ausführungsbeispiel der Fig. 1 wird die Spannfläche 17 durch eine Vielzahl axial nebeneinander angeordneter, ringförmiger Dachflächen 27 definiert. Es versteht sich, dass anstelle einer Vielzahl axial nebeneinander angeordneter Ringnuten 21 auch eine einzige Wendelnut oder ggf. mehrere axial versetzte Wendelnuten vorgesehen sein können, die in der Spannfläche 17 schraubenlinienförmig vorgesehen sind. Eine solche, nicht näher dargestellte Wendelnut erzeugt Stützelementwindungen, die den vorstehend erläuterten ringförmigen Stützelementen 21 entsprechen.

Im Folgenden werden Varianten des Werkzeughalters der Fig. 1 erläutert. Gleich wirkende Komponenten sind mit den Bezugszahlen vorangegangen erläuterter Ausführungsbeispiele bezeichnet und zur Unterscheidung mit einem Buchstaben versehen. Zur Erläuterung des Aufbaus und der Wirkungsweise sowie eventueller Varianten, wird auf die gesamte Beschreibung Bezug genommen.

Im Ausführungsbeispiel der Fig. 1 verlaufen die beiden Nutseitenflächen 23 der Ringnuten 21 rechtwinkelig zur Drehachse 7 und dementsprechend haben die Stützelemente 25, gesehen im Axiallängsschnitt des Aufnahmeabschnittes 5, Rechteckkontur. In einer Variante können die Nutseitenflächen auch unter einem von 90° abweichenden, spitzen Winkel zur Drehachse 7 geneigt sein, so dass sie im Wesentlichen Konusform haben. Je nach der Richtung, in der sich die konischen Nutseitenflächen jeder Ringnut bzw. jeder Wendelnut relativ zueinander paarweise verjüngen, können die Dachflächen der Stützbereiche - gesehen im Axiallängsschnitt des Aufnahmeabschnitts 5 - auch einer Parallelogrammkontur oder einer Trapezkontur folgen.

Fig. 2 zeigt einen Werkzeughalter 1a, dessen Aufnahmeabschnitt 5a durch eine die Aufnahmeöffnung 13a für den nicht näher dargestellten Werkzeugschaft bildende Hülse 9a gebildet ist. Die wiederum als Spannfläche 17a dienende innere Umfangsfläche der Aufnahmeöffnung 13a der Hülse 9a enthält eine Vielzahl axial nebeneinander angeordneter Ringnuten 21a, deren Nutseitenflächen 23a konisch verlaufen und sich in Richtung der Drehachse 7a von der durch die Stirnfläche 11a begrenzten Einsteckseite des Werkzeugschafts weg gerichtet gleichsinnig und unter gleichem Konuswinkel verjüngen. Die zwischen benachbarten Ringnuten 21a verbliebenen Stützelemente 25a haben damit generell Parallelogrammform und sind entgegen der Auszugsrichtung des Werkzeugschafts schräg gestellt. Bei Belastung des Werkzeugschafts in Auszugsrichtung werden die Stützelemente 25a aufgerichtet, was den auf den Werkzeugschaft ausgeübten radialen Anpressdruck erhöht.

Fig. 3 zeigt einen Werkzeughalter 1b, der sich von dem Werkzeughalter der Fig. 2 im Wesentlichen nur dadurch unterscheidet, dass die Stützfläche 17b der Hülse 9b zwei Gruppen von Ringnuten 21b und 21b' mit jeweils konischen Nutseitenflächen 23b bzw. 23b' enthält, die jeweils paarweise zwischen sich schräg gestellte Stützelemente 25b bzw. 25b' bilden. Die Nutseitenflächen 23b bzw. 23b' verjüngen sich innerhalb jeder Gruppe gleichsinnig und mit gleichem Konuswinkel, jedoch verjüngen sich die Nutseitenflächen der beiden Gruppen gegensinnig. Die durch die Ringnuten 21b und 21 b' gebildeten Stützelemente 25b bzw. 25b' der beiden Gruppen sind dementsprechend gegensinnig schräg gestellt. Im dargestellten Ausführungsbeispiel verjüngen sich die Ringnuten 21b und 21b' der beiden Gruppen aufeinander zu. Beide Gruppen enthalten angenähert gleiche Anzahl an Stützelementen.

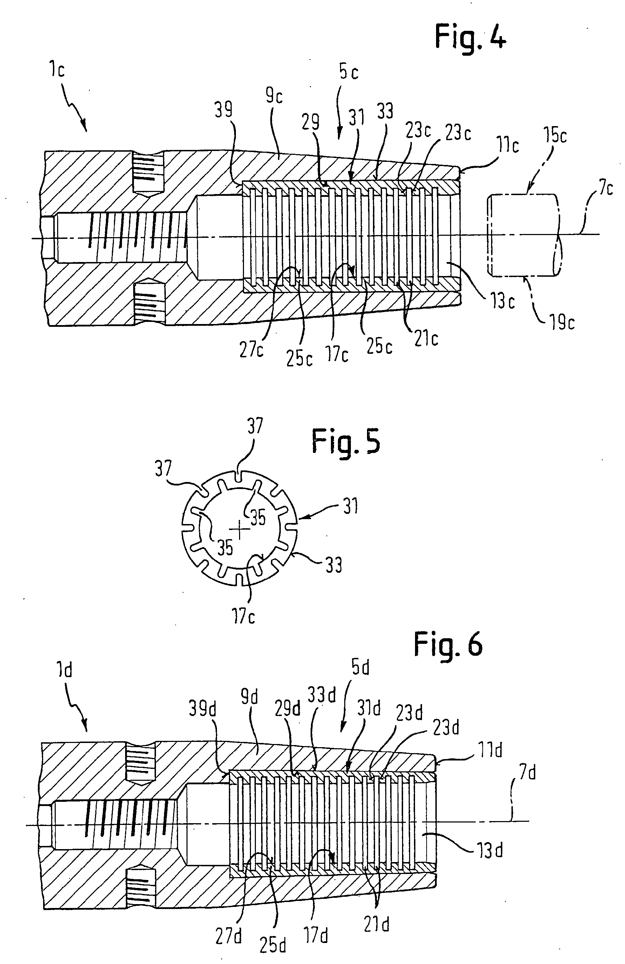

Bei den vorangegangen erläuterten Varianten des Werkzeughalters ist die Stützelementstruktur unmittelbar in das Material der einteilig an dem Werkzeughalter angeformten, den Aufnahmeabschnitt 5 bildenden Hülse eingeformt. Fig. 4 zeigt eine Variante eines Werkzeughalters 1c vom Schrumpffuttertyp, dessen den Aufnahmeabschnitt 5c bildende Hülse 9c zentrisch zur Drehachse 7c eine kreiszylindrische Aufnahmeöffnung 29 für eine Buchse 31 bildet. Die Buchse 31 hat eine kreiszylindrische, äußere Umfangsfläche 33 und bildet mit ihrer gleichfalls kreiszylindrischen inneren Umfangsfläche die Spannfläche 17c des Werkzeughalters für die Presssitzaufnahme des Werkzeugschafts 15c.

Wie Fig. 5 zeigt enthält die Spannfläche 17c der Buchse 31 eine Vielzahl in Umfangsrichtung verteilter, axial sich erstreckender Nuten 35. In der äußeren Umfangsfläche 33 der Buchse 31 sind weitere axial verlaufende Nuten 37 jeweils mittig zwischen einem Paar der Nuten 35 angeordnet. Die Buchse 31 hat damit im Axialquerschnitt eine etwa meanderförmige Wandstruktur und damit radial elastische Eigenschaften. Es versteht sich, dass die Schlitze 35 und 37 gegebenenfalls auch als radial die Buchse 31 durchdringende Schlitze ausgebildet sein können.

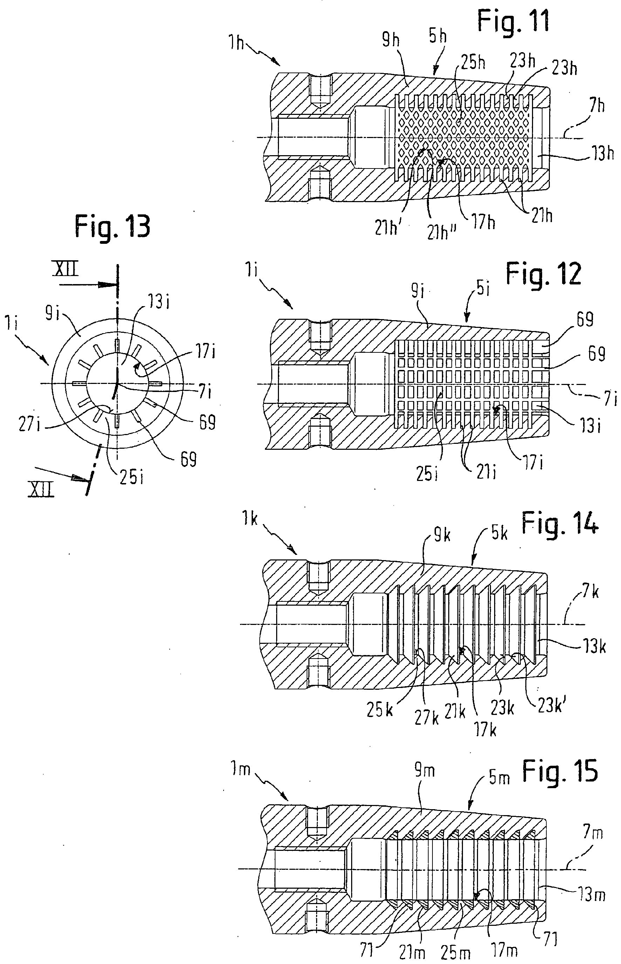

Im Gegensatz zu den Ausführungsformen der Fig. 1 bis 3 sind die Ringnuten 21c und die zwischen den Ringnuten 21c gebildeten, ringförmigen Stützelemente 25c in der durch die Buchse 31 gebildeten Stützfläche 17c eingeformt. Im dargestellten Ausführungsbeispiel haben die Ringnuten 21c achsnormal verlaufende Nutseitenflächen 23c. Die Nutseitenflächen 23c können jedoch auch entsprechend den anhand der Fig. 1 bis 3 oder nachfolgend anhand der Fig. 11 bis 15 erläuterten Varianten abgewandelt sein.

Der Werkzeughalter 1c wird durch Erwärmen der Hülse 9c in seine Lösestellung gedehnt, in der sich die radialelastische Hülse 31 soweit radial aufweitet, dass der Werkzeugschaft 15c in die Aufnahmeöffnung 13c eingesteckt oder aus ihr entnommen werden kann. Nach dem Abkühlen spannt die Hülse 9c den Werkzeugschaft 15c im Presssitz, wobei die mit ihrer Spannfläche 17c flächig an der kreiszylindrischen, äußeren Umfangsfläche 19c des Werkzeugschafts 15c anliegende Buchse 31 die Presssitzkräfte von der Hülse 9c auf den Werkzeugschaft 15c überträgt.

Die Hülse 31 sitzt entnehmbar in der Hülse 9c, so dass durch Auswechseln der Buchse 31 der Werkzeughalter 1c an Werkzeugschäfte mit unterschiedlichem Durchmesser angepasst werden kann. Zweckmäßigerweise ist die innere Umfangsfläche 29 der Hülse 9c auf der von der Stirnfläche 11c axial abgewandten Seite durch eine Ringschulter 39 begrenzt, an der die Buchse 31 mit ihrem inneren Ende axial abgestützt und positioniert ist.

Fig. 6 zeigt einen Werkzeughalter 1d, der sich von dem Werkzeughalter 1c im Wesentlichen nur dadurch unterscheidet, dass die äußere Umfangsfläche 33d der Buchse 31d wie auch die an der äußeren Umfangsfläche 31d anliegende innere Umfangsfläche 29d der Hülse 9d Konusform hat und sich zur werkzeugseitigen Stirnfläche 11d der Hülse 9d hin verjüngen. Die radialelastische Buchse 31d wird dann beim Spannen des Werkzeughalter 1d selbsttätig gegen die Anschlagschulter 39d gezogen und dort axial positioniert.

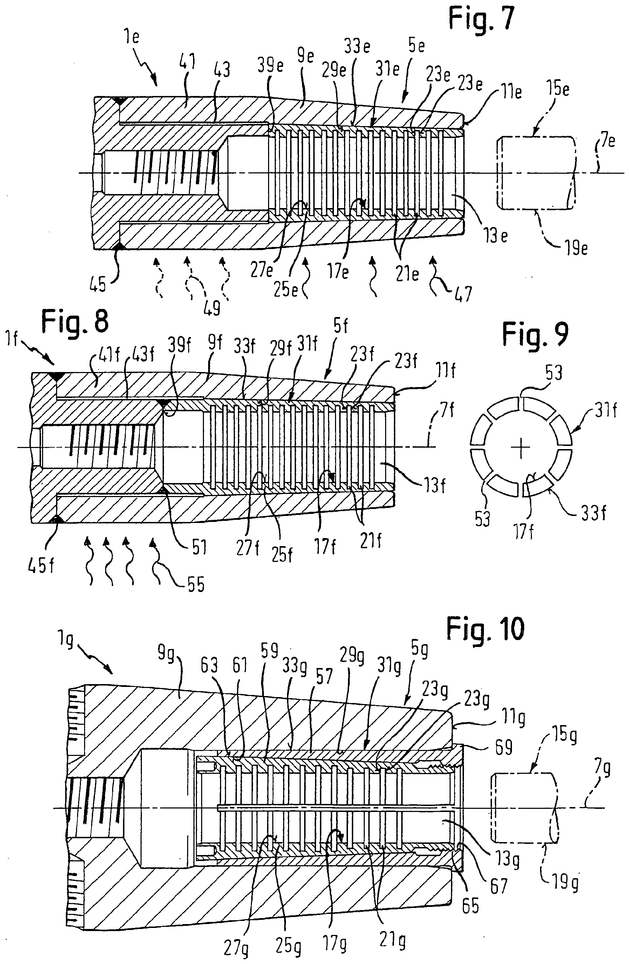

Fig. 7 zeigt einen Werkzeughalter 1e, der sich von dem Werkzeughalter der Fig. 6 im Wesentlichen dadurch unterscheidet, dass die mit ihrer konischen inneren Umfangsfläche 29e an der gleichfalls konischen äußeren Umfangsfläche 33e der Buchse 31e anliegende, die Presssitzkräfte in der Spannstellung erzeugende Hülse 9e auf ihrer der Stirnfläche 11e und damit dem Rotationswerkzeug axial abgewandten Seite eine gleichfalls hülsenförmige Verlängerung 41 hat, die den die Anschlagschulter 39e bildenden Bereich des Werkzeughalters 1e auf der von der Buchse 31e axial abgewandten Seite unter Bildung eines Ringspalts 43 mit radialem Abstand umschließt. Die Verlängerung 41 ist an ihrem der Stirnfläche 11e axial abgewandten Ende fest mit dem Werkzeughalter 1e verbunden. Die Buchse 31e kann entnehmbar in die Hülse 9e eingesetzt sein; sie kann aber auch im Bereich der Schulter 39e fest mit dem Werkzeughalter 1e verbunden, beispielsweise angeschweißt oder integral an dem Werkzeughalter 1e angeformt sein. Die Hülse 9e ist zweckmäßigerweise als gesondertes Bauteil hergestellt und wird nachträglich an dem vom Rotationswerkzeug axial abgewandten Ende der Verlängerung 41 fest mit dem Werkzeughalter 1e verbunden, beispielsweise angeschweißt, wie dies bei 45 angedeutet ist.

Der Werkzeughalter 1e ist vom Schrumpffuttertyp. Zum Lösen des Werkzeughalters 1e wird die Hülse 9e zumindest im Bereich ihrer konischen, die Hülse 31e umschließenden inneren Umfangsfläche 29e beispielsweise auf induktivem Wege erwärmt, wie dies durch Pfeile 47 angedeutet ist. Die Erwärmung kann sich auch in den Bereich der Verlängerung 41 hin erstrecken (Pfeile 49), was den Vorteil hat, dass die den Werkzeugschaft 15e über die Buchse 31e spannende Hülse 9e nicht nur radial, sondern auch axial verstärkt gedehnt wird, was den Öffnungshub des Werkzeughalters 1e vergrößert.

Beim Abkühlen schrumpft die Hülse 9e nicht nur radial zur Erzeugung der auf den Werkzeugschaft 15e auszuübenden radialen Presssitzkräfte, sondern auch in axialer Richtung. Die axiale Schrumpfung erhöht über die konusförmigen Flächen 29e, 33e einerseits die radialen Presssitzkräfte, verspannt aber andererseits die Hülse 9e axial. Es hat sich gezeigt, dass durch axiale Verspannung der Hülse 9e Schwingungen des Werkzeughalters im Betrieb verringert werden. Da die konische innere Umfangsfläche 29e reibschlüssig die äußere Umfangsfläche 33e der Buchse 31e umschließt, erhöhen dort sich ergebende Reibverluste die Dämpfungswirkung.

Die Hülse 9e kann aus dem Material bestehen, aus dem auch der Rest des Werkzeughalters 1e und auch die Buchse 31e bestehen. Vorzugsweise besteht jedoch die Hülse 9e aus einem Material, dessen Wärmeausdehnungskoeffizient größer ist als der Wärmeausdehnungskoeffizient der Buche 31e und zumindest des die Anschlagfläche 39e bildenden Bereichs des Werkzeughalters 1e. Auf diese Weise kann der Spannhub des Werkzeughalters 1e und auch die maximal erreichbare axiale Spannkraft der Hülse 9e erhöht und damit die Dämpfungswirkung verbessert werden.

Im Ausführungsbeispiel der Fig. 7 ist die Buchse 31e mit der vorangegangen anhand der Fig. 1 bis 3 erläuterten oder nachfolgend anhand der Fig. 11 bis 15 noch zu erläuternden Stützelementstruktur versehen.

Fig. 8 zeigt einen Werkzeughalter 1f vom Schrumpffuttertyp, der sich von dem Werkzeughalter der Fig. 7 und den dort erläuterten Varianten im Wesentlichen nur dadurch unterscheidet, dass die mit ihrer konischen äußeren Umfangsfläche 33f an der konischen inneren Umfangsfläche 29f der Hülse 9f anliegende Buchse 31f fest mit dem Werkzeughalter 1f verbunden ist, hier an einer Schweißnaht 51 verschweißt ist und zur Erreichung ihrer radialelastischen Eigenschaften mit axial langgestreckten, radial die Buchse 31f durchdringenden Schlitzen 53 versehen ist. Es versteht sich, dass die Buchse 31f auch integral an dem Werkzeughalter 1f angeformt sein kann. Die Hülse 9f hat wiederum eine den Werkzeughalter 1f auf der dem Rotationswerkzeug axial abgewandten Seite der Stützfläche 17f mit radialem Abstand umschließende Verlängerung 41f und ist auf der dem Rotationswerkzeug axial abgewandten Seite der Verlängerung 41f fest mit dem Werkzeughalter 1f verbunden, hier an einer Schweißnaht 45f angeschweißt. Die Hülse 9f besteht vorzugsweise aus einem Material mit einem größeren Wärmedehnungskoeffizienten als die Buchse 31f und dem Material des Werkzeughalters 1f im Bereich der Verlängerung 41f.

Der Werkzeughalter 1f wird zweckmäßigerweise ausschließlich im Bereich der Verlängerung 41f erwärmt, wie dies durch Pfeile 55 in Fig. 8 angedeutet ist. Der die Buchse 31f umschließende Bereich der Hülse 9f wird nicht mit erwärmt, so dass die auf die Buchse 31f wirkenden radialen Presssitzkräfte ausschließlich durch axiale Relativverschiebung der konischen Flächen 29f, 43f nach Art einer Spannzange erzeugt werden. Beim Spannen des Werkzeughalters 1f werden in der Hülse 9f axiale Spannkräfte erzeugt, die wie vorangegangen in Zusammenhang mit Fig. 7 erläutert die Dämpfungseigenschaften des Werkzeughalters verbessern.

Fig. 10 zeigt einen Werkzeughalter 1g vom Schrumpffuttertyp, der ähnlich dem Werkzeughalter 1c der Fig. 4 in einer kreiszylindrischen, inneren Umfangsfläche 29g seiner Hülse 9g eine Durchmesserausgleichsbuchse 31g enthält. Die Durchmesserausgleichsbuchse 31g bildet mit ihrer inneren Umfangsfläche die Spannfläche 17g, die im Spannzustand des Werkzeughalters 1g an der äußeren Umfangsfläche 19g des in die Aufnahmeöffnung 13g eingesteckten Werkzeughalters 15g im Presssitz anliegt.

Im Unterschied zur Buchse 31 des Werkzeughalters 1c aus Fig. 4 besteht die Buchse 31g aus zwei koaxial ineinander angeordneten Hülsen 57, 59, von denen die äußere Hülse 57 die kreiszylindrische äußere Umfangsfläche 33g bildet und eine konische Innenfläche hat. Die innere Hülse 59 bildet die Spannfläche 17g und hat eine an der konischen Innenfläche der äußeren Hülse 57 anliegende konische Außenfläche 63. Die innere Hülse 59 ist radialelastisch ausgebildet und hat beispielsweise ähnlich der Buchse 31 in Fig. 5 in Umfangsrichtung verteilt auf ihrer inneren Spannfläche 17g oder/und ihrer äußeren Umfangsfläche 63 axial verlaufende Nuten. In entsprechender Weise kann die äußere Hülse 57 radialelastisch ausgebildet sein. Anstelle der Nuten können auch radial durchgehende Schlitze vorgesehen sein, wie sie für die Buchse 31f in Fig. 9 dargestellt sind. Durch axiales Relativverschieben der beiden Hülsen 57, 59 kann der Innendurchmesser der Spannfläche 17g verändert und variabel an den Durchmesser des Werkzeugschafts 15g angepasst werden. Auf diese Weise können mit ein und derselben Buchse 31g in einem gewissen Durchmesserbereich Werkzeugschäfte unterschiedlichen Durchmessers gespannt werden.

Zum Spannen des Werkzeugschafts 15g wird die aus der Hülse 9g des Werkzeughalters 1g entnommene Buchse 31g auf den Werkzeugschaft 15g aufgesteckt. Durch axiales Verstellen der Hülsen 57, 59 relativ zueinander kann dann die Spannfläche 17g engpassend flächig auf den Werkzeugschaft 15g angelegt werden. Um das Anlegen zu erleichtern, ist am verjüngten Ende der inneren Hülse 59 ein Außengewinde 65 vorgesehen, das in ein Innengewinde 67 der inneren Hülse schraubbar ist. Es genügt, dass lediglich das Spiel zwischen der Spannfläche 17g und dem Werkzeugschaft 15g ausgeglichen wird, da die für den Betrieb erforderlichen Presssitzkräfte von der Hülse 9g über die Buchse 31g auf den Werkzeugschaft 15g ausgeübt werden. Um die Buchse axial definiert in die Hülse 9g einsetzen zu können, trägt die äußere Hülse 57 einen Ringbund 69, der an der Stirnfläche 11g der Hülse 9g anschlägt.

Die innere Hülse 59 ist im Bereich ihrer Spannfläche 17g mit einer durch Ringnuten 21g gebildeten Struktur von ringförmigen Stützelementen 25g versehen, wie dies im Einzelnen anhand der Fig. 1 bis 5 erläutert wurde.

Im Folgenden werden weitere Varianten der bereits anhand der Fig. 1 bis 3 erläuterten Stützelementstruktur anhand der Fig. 11 bis 15 beschrieben. Die Stützelementstrukturen lassen sich nicht nur bei dem Werkzeughalter der Fig. 1, sondern auch den nachfolgend erläuterten Werkzeughaltern der Fig. 4 bis 10 nutzen.

Bei den vorangegangen erläuterten Stützelementstrukturen erzeugen die als Wendelnut oder Ringnut ausgebildeten Nutabschnitte wendelnutförmige oder ringförmig geschlossene, die Drehachse umschließende, langgestreckt-stegförmige Stützelemente. Fig. 11 zeigt einen Werkzeughalter 1h, dessen Aufnahmeabschnitt 5h durch eine die Aufnahmeöffnung 13h für den nicht näher dargestellten Werkzeugschaft bildende Hülse 9h gebildet ist. Die wiederum als Spannfläche 17h dienende innere Umfangsfläche der Aufnahmeöffnung 13h der Hülse 9h enthält eine Vielzahl axial nebeneinander angeordneter Wendelnutabschnitte 21h, deren Nutseitenflächen 23h radial rechtwinklig verlaufen.

Es sind zwei Gruppen von Wendelnutabschnitten 21h' und 21h" vorgesehen. In einer ersten der beiden Gruppen haben die Wendelnutabschnitte 21h' gleiche Steigung und verlaufen mit axialem Abstand voneinander nebeneinander, kreuzen sich also nicht. Entsprechendes gilt für die Wendelnutabschnitte 21h" der zweiten Gruppe, wobei jedoch die Steigung der Wendelnutabschnitte 21h" der zweiten Gruppe zwar gleich jedoch gegensinnig zur Steigung der Wendelnutabschnitte 21h' der ersten Gruppe ist. Die Wendelnutabschnitte 21h" kreuzen dementsprechend die Wendelnutabschnitte 21h' und bilden auf diese Weise allseitig voneinander beabstandete Stützelemente 25h in Form rautenförmiger Noppen. Ähnliche Noppen entstehen, wenn die beiden Wendelnutabschnitte 21h' und 21h" gleichsinnig gewendelt sind, jedoch voneinander verschiedene Steigung haben.

Die Fig. 12 und 13 zeigen eine Variante 1i mit einer ersten Gruppe axial gegeneinander versetzter achsnormaler Ringnuten 21i, wie sie anhand der Fig. 1 erläutert wurden und zusätzlich einer zweiten Gruppe von in Umfangsrichtung der Spannfläche 17i gegeneinander versetzter, in Richtung der Drehachse 7i sich erstreckender Nuten 69, die sich mit den Ringnuten 21i kreuzen. Die zueinander parallelen Ringnuten 21i der ersten Gruppe und die gleichfalls zueinander parallelen axialen Nuten 69 der zweiten Gruppe begrenzen in der Spannfläche 17i wiederum voneinander allseitig im Abstand gelegene Stützelemente 25i in Form von Noppen, deren Dachflächen 27i ähnlich der Variante der Fig. 11 die Stützfläche 17i bilden.

Fig. 14 zeigt einen Werkzeughalter 1k, der sich von dem Werkzeughalter 1a der Fig. 2 im Wesentlichen nur dadurch unterscheidet, dass die Ringnuten 21k auf ihrer zur Werkzeugeinsteckseite hin gelegenen Seite eine achsnormal zur Drehachse 7k verlaufende Nutseitenfläche 23k und auf ihrer axial gegenüberliegenden Seite eine von der Werkzeugeinsteckseite axial weg gerichtet sich verjüngende konische Nutseitenfläche 23k' haben. Die zwischen benachbarten Ringnuten 21k verbliebenen Stützelemente 25k haben damit generell Trapezform und sind entgegen der Auszugrichtung des Werkzeugschafts schräg gestellt.

Fig. 15 zeigt eine Variante 1m des Werkzeughalters 1k aus Fig. 14, die sich von diesem Werkzeughalter im Wesentlichen nur dadurch unterscheidet, dass die Ringnuten 21m mit einer Füllung 71 aus einem vom Material der Hülse 9m abweichenden Material ausgefüllt sind. Die Füllung 71 kann aus Keramik, Metall oder Kunststoff bestehen und verbessert, je nach Art des Materials, die Schwingungsdämpfung und/oder sorgt für eine thermische Isolierung des Werkzeugschafts beim Schrumpfvorgang. Es versteht sich, dass die dämpfende oder thermisch isolierende Füllung auch bei den vorangegangen erläuterten Stützelementstrukturen der Ausführungsbeispiele der Fig. 1 bis 13 in gleicher Weise eingesetzt werden kann. Im Einzelfall kann es genügen, wenn lediglich ein Teil der Gesamtanzahl an Nutabschnitten mit einer solchen Füllung versehen wird oder aber lediglich ein Teilabschnitt der Längserstreckung dieser Nutabschnitte gefüllt wird. Insbesondere bei axial verlaufenden Nuten oder Wendelnuten kann hierdurch auch eine Abdichtung des Nutkanals erreicht werden.

## Patentansprüche

1. Werkzeughalter, dessen Aufnahmeabschnitt (5) für die Halterung eines Schafts (15) eines Rotationswerkzeugs zentrisch zu einer Drehachse (7) des Werkzeughalters (1) vorgesehene Spannmittel (9) umfasst, die eine Aufnahmeöffnung (13) für den Schaft (15) definieren, wobei die Spannmittel (9) zwischen einer radial aufgeweiteten Lösestellung zum Einsetzen oder Entnehmen des Schafts (15) und einer Spannstellung, in der die Spannmittel (9) radiale, den Schaft (15) an seiner kreiszylindrischen, äußeren Umfangsfläche (19) im Reibschluss haltende Presssitzkräfte auf den Schaft (15) ausüben, radial verstellbar sind, wobei den Spannmitteln (9) eine Spannfläche (17) mit kreiszylindrischen Kontur zugeordnet ist, die in der Spannstellung flächig an der äußeren Umfangsfläche (19) des Schafts (15) anliegt,
wobei der die Spannfläche (17) bildende Bereich des Werkzeughalters (1) eine Vielzahl um die Drehachse herum gekrümmte Nutabschnitte (21) in axialem Abstand voneinander aufweist, die - in Richtung der Drehachse (7) gesehen - zwischen sich einstückig miteinander verbundene und in axialem Abstand voneinander angeordnete, zur Drehachse (7) hin vorstehende Stützbereiche (25) begrenzen, deren zur Drehachse (7) hin gelegene Dachflächen (27) die kreiszylindrische Spannfläche (17) bilden, **dadurch gekennzeichnet, dass**
entweder die Nutabschnitte (21) in einer die kreiszylindrisch konturierte Spannfläche (17) bildenden, inneren Umfangsfläche einer radial elastischen, den Schaft (15) des Rotationswerkzeugs aufnehmenden Buchse (31) vorgesehen sind,
und die Spannmittel (9) eine weitere, zwischen der Lösestellung und der Spannstellung radial verstellbare Spannfläche (29) aufweisen, wobei in der Lösestellung der Spannmittel (9) zum einen die Buchse (31) in die Aufnahmeöffnung einsetzbar oder aus ihr entnehmbar ist, oder/und zum anderen der Schaft (15) in die Buchse (31) einsetzbar oder aus ihr entnehmbar ist, und in der Spannstellung die Buchse (31) die radialen Presssitzkräfte der Spannmittel (9) auf den Schaft (15) überträgt, oder dass die Nutabschnitte (21) unmittelbar in das Material des Aufnahmeabschnitts (5) eingeformt sind.

2. Werkzeughalter nach Anspruch 1,
**dadurch gekennzeichnet, dass** die Nutabschnitte (21) durch wenigstens eine um die Drehachse (7) herum gekrümmte Wendelnut oder durch eine Vielzahl in axialem Abstand voneinander angeordnete, die Drehachse (7) umschließende Ringnuten gebildet sind.

3. Werkzeughalter nach Anspruch 1,
**dadurch gekennzeichnet, dass** der die Spannfläche (17h, i) bildende Bereich des Werkzeughalters (1 h,i) eine Vielzahl allseitig in Abstand voneinander angeordnete Stützbereiche (25h, i) in Form von durch die Nutabschnitte (21 h,k) allseitig voneinander getrennter, jedoch einstückig miteinander verbundener Noppen aufweist, deren zur Drehachse (7h, i) hin vorstehende Dachflächen die kreiszylindrische Spannfläche (17h,i) bilden.

4. Werkzeughalter nach Anspruch 3,
**dadurch gekennzeichnet, dass** die Stützbereiche (25h,i) längs der Spannfläche (17h,i) durch wenigstens zwei Gruppen von Nutabschnitten (21h; 21i, 69) begrenzt sind, wobei die Nutabschnitte (21h; 21i, 69) jeder Gruppe innerhalb der Spannfläche ohne sich zu kreuzen im Abstand nebeneinander verlaufen und sich die Nutabschnitte (21h; 21i, 69) verschiedener Gruppen innerhalb der Spannfläche (17h,i) zur Bildung der Stützbereiche (25h,i) kreuzen.

5. Werkzeughalter nach Anspruch 4,
**dadurch gekennzeichnet, dass** die Nutabschnitte (21h') einer ersten Gruppe durch wenigstens eine um die Drehachse herum gekrümmte Wendelnut und die Nutabschnitte (21h") einer zweiten Gruppe durch wenigstens eine gegensinnig zur wenigstens einen Wendelnut der ersten Gruppe oder mit anderer Steigung als die wenigstens eine Wendelnut der ersten Gruppe um die Drehachse (7h) herum gekrümmte Wendelnut oder/und eine Vielzahl die Drehachse (7h) umschließender, in axialem Abstand voneinander angeordneter Ringnuten oder/und eine Vielzahl in Umfangsrichtung der Spannfläche verteilt angeordneter, axial sich erstreckender Nuten gebildet sind.

6. Werkzeughalter nach Anspruch 4,
**dadurch gekennzeichnet, dass** die Nutabschnitte einer ersten Gruppe durch eine Vielzahl die Drehachse (7i) umschließender, in axialem Abstand voneinander angeordneter Ringnuten (21i) und die Nutabschnitte einer zweiten Gruppe durch wenigstens eine um die Drehachse herum gekrümmte Wendelnut oder/und eine Vielzahl in Umfangsrichtung der Spannfläche verteilt angeordneter, axial sich erstreckender Nuten (69) gebildet sind.

7. Werkzeughalter nach einem der Ansprüche 1 bis 6,
**dadurch gekennzeichnet, dass** die Dachfläche (27) der Stützbereiche (25) - gesehen im Axiallängsschnitt des Aufnahmeabschnitts (5) - zusammen mit axial seitlich der Dachfläche (27) anschließenden Nutseitenflächen (23) einer Rechteckkontur oder einer Parallelogrammkontur oder einer Trapezkontur folgen.

8. Werkzeughalter nach Anspruch 7,
**dadurch gekennzeichnet, dass** zumindest eine der Nutseitenflächen (23) einer Vielzahl axial benachbarter Stützbereiche (25), insbesondere beide Nutseitenflächen (23), rechtwinklig zur Drehachse (7) verlaufen.

9. Werkzeughalter nach Anspruch 7 oder 8,
**dadurch gekennzeichnet, dass** zumindest eine der Nutseitenflächen (23a,b) einer Vielzahl axial benachbarter Stützbereiche (25a,b), insbesondere beide Nutseitenflächen (23a, b), Konusform haben.

10. Werkzeughalter nach Anspruch 9,
**dadurch gekennzeichnet, dass** sich beide konische Nutseitenflächen (23a,b) jedes Stützbereichs (25a,b) der Vielzahl axial benachbarter Stützbereiche (25a,b) in Richtung der Drehachse (7a,b) gleichsinnig verjüngen.

11. Werkzeughalter nach Anspruch 10,
**dadurch gekennzeichnet, dass** sich die beiden konischen Nutseitenflächen (23a,b) jedes Stützbereichs (25a,b) der Vielzahl axial benachbarter Stützbereiche (25a,b) von der Seite des Werkzeugs weg gerichtet verjüngen.

12. Werkzeughalter nach Anspruch 10,
**dadurch gekennzeichnet, dass** die zwei Gruppen mit je einer Vielzahl axial benachbarter Stützbereiche (23b, 23b') vorgesehen sind, deren konusförmige Nutseitenflächen (23b, 23b') sich gleichsinnig verjüngen, wobei sich die konusförmigen Nutseitenflächen (23ab, 23b') in den beiden Gruppen gegensinnig verjüngen.

13. Werkzeughalter nach Anspruch 12,
**dadurch gekennzeichnet, dass** sich die konusförmigen Nutseitenflächen (23b, 23b') der beiden Gruppen aufeinander zu verjüngen.

14. Werkzeughalter nach einem der Ansprüche 1 bis 13,
**dadurch gekennzeichnet, dass** die Breite jedes Nutabschnitts (21) kleiner als die Breite der Dachfläche (27) zwischen benachbarten Nutabschnitten (21) ist.

15. Werkzeughalter nach einem der Ansprüche 1 bis 14,
**dadurch gekennzeichnet, dass** die radiale Tiefe jedes Nutabschnitts (21) größer ist als die Breite des Nutabschnitts (21) oder/und die Breite der Dachfläche (27).

16. Werkzeughalter nach einem der Ansprüche 1 bis 15,
**dadurch gekennzeichnet, dass** die Nutabschnitte (21m) zumindest auf einem Teil ihrer Längserstreckung, insbesondere jedoch im Wesentlichen auf ihrer ganzen Länge mit einem vom Material des die Spannfläche (17m) bildenden Bereichs des Werkzeughalters (1m) verschiedenen Material (71) ausgefüllt sind.

17. Werkzeughalter nach Anspruch 16,
**dadurch gekennzeichnet, dass** das Füllmaterial (71) aus Kunststoff oder Keramik oder Metall besteht.

18. Werkzeughalter nach einem der Ansprüche 1 bis 17,
**dadurch gekennzeichnet, dass** die Buchse (31) wenigstens eine axial sich erstreckende Ausgleichsfuge (35, 37), vorzugsweise jedoch mehrere solcher Ausgleichsfugen (35, 37) in Umfangsrichtung versetzt aufweist.

19. Werkzeughalter nach Anspruch 18,
**dadurch gekennzeichnet, dass** die wenigstens eine Ausgleichsfuge als axial sich erstreckende Nut (35, 37) oder als axial sich erstreckender, die Buchse (31) radial durchdringender Schlitz (53) ausgebildet ist.

20. Werkzeughalter nach Anspruch 19,
**dadurch gekennzeichnet, dass** die Buchse (31) auf ihrer inneren Umfangsfläche (17c) in Umfangsrichtung vertieft mehrere axial sich erstreckende Nuten (35) und auf ihrer äußeren Umfangsfläche (33) weitere axial sich erstreckende Nuten (37) aufweist, die in Umfangsrichtung zwischen je einem Paar von Nuten (35) der inneren Umfangsfläche 17c) angeordnet sind.

21. Werkzeughalter nach einem der Ansprüche 1 bis 17,
**dadurch gekennzeichnet, dass** die Buchse (31) zwei koaxial ineinander angeordnete Hülsen (57, 59) umfasst, von denen die äußere Hülse (57) eine konische Innenfläche (61) hat und von denen die innere Hülse (59) eine an der konischen Innenfläche (61) anliegende, konische Außenfläche (63) und eine die Spannfläche (17g) der Buchse (31g) bildende, kreiszylindrisch konturierte Innenfläche hat, deren Innendurchmesser durch axiales Verschieben der inneren Hülse (59) und der äußeren Hülse (57) relativ zueinander bis zur Anlage der Spannfläche (17g) an den Schaft (15g) änderbar ist.

22. Werkzeughalter nach Anspruch 21,
**dadurch gekennzeichnet, dass** zumindest die innere Hülse (59), vorzugsweise auch die äußere Hülse (57), wenigstens eine axial sich erstreckende Ausgleichsfuge, vorzugsweise jedoch mehrere solcher Ausgleichsfugen in Umfangsrichtung verteilt, aufweist.

23. Werkzeughalter nach Anspruch 22,
**dadurch gekennzeichnet, dass** die wenigstens eine Ausgleichsfuge als axial sich erstreckende Nut oder als axial sich erstreckender, die Hülse (57, 59) radial durchdringender Schlitz ausgebildet ist.

24. Werkzeughalter nach Anspruch 23,
**dadurch gekennzeichnet, dass** zumindest die innere Hülse (59) auf ihrer inneren Umfangsfläche (17g) in Umfangsrichtung verteilt mehrere axial sich erstreckende Nuten und auf ihrer äußeren Umfangsfläche (63) weitere axial sich erstreckende Nuten aufweist, die in Umfangsrichtung zwischen je einem Paar von Nuten der inneren Umfangsfläche (17g) angeordnet sind.

25. Werkzeughalter nach einem der Ansprüche 1 bis 24,
**dadurch gekennzeichnet, dass** die weitere Spannfläche der Spannmittel (9d, e, f) als konische Innenfläche (29d,e,f) ausgebildet ist und die Buchse (31d,e,f) eine an der konischen Innenfläche (29d,e,f) anliegende, konische Außenfläche (33d,e,f) hat, die sich entsprechend der konischen Innenfläche (29d,e,f) in Richtung der Drehachse (7d,e,f) zum Rotationswerkzeug hin verjüngt,
und dass die Buchse (31d,e,f) auf der dem Rotationswerkzeug axial abgewandten Seite des Bereichs ihrer Spannfläche (17d,e,f) an dem Werkzeughalter axial abgestützt ist.

26. Werkzeughalter nach Anspruch 25,
**dadurch gekennzeichnet, dass** der Werkzeughalter (1d,e,f) zur Bildung der Spannmittel einen durch Erwärmen in die Lösestellung und durch Abkühlen in die Spannstellung überführbaren, die konische Innenfläche (29d,e,f) der weiteren Spannfläche bildenden Hülsenabschnitt (9d,e,f) aufweist, der die konische Außenfläche (33d,e,f) der Buchse (31d,e,f) umschließt und auf der dem Rotationswerkzeug axial abgewandten Seite der durch die innere Umfangsfläche der Buchse (31d,e,f) gebildeten Spannfläche (17d,e,f) fest mit dem Werkzeughalter (1 d,e,f) verbunden ist.

27. Werkzeughalter nach Anspruch 26,
**dadurch gekennzeichnet, dass** der Hülsenabschnitt (9e,f) auf der dem Rotationswerkzeug axial abgewandten Seite eine axial über dem die weitere Spannfläche (29e,f) bildenden Bereich axial hinausreichende, den Werkzeughalter (1e,f) oder/und die Buchse (31e,f) mit radialem Abstand umschließende Verlängerung (41, 41f) aufweist, deren Endbereich mit dem Werkzeughalter (1e,f) fest verbunden ist, oder/und dass der Hülsenabschnitt (9e,f) aus einem Material besteht, dessen Wärmeausdehnungskoeffizient größer ist als der Wärmeausdehnungskoeffizient der Buchse (31e,f), oder/und des von dem Hülsenabschnitt (9e,f) umschlossenen Bereichs des Werkzeughalters (1e,f).

28. Werkzeughalter nach Anspruch 27,
**dadurch gekennzeichnet, dass** der Hülsenabschnitt (9e,f) an den Werkzeughalter (1e,f) angeschweißt ist.

29. Werkzeughalter nach Anspruch 27 oder 28,
**dadurch gekennzeichnet, dass** das dem Rotationswerkzeug axial abgewandte Ende der Buchse (31f) fest mit dem Werkzeughalter (1f) verbunden, insbesondere angeschweißt, ist.

## Claims

1. Tool holder, of which the receiving portion (5) for holding a shaft (15) of a rotation tool comprises clamping means (9) provided centrally with respect to an axis of rotation (7) of the tool holder (1), which clamping means define a receiving opening (13) for the shaft (15), the clamping means (9) being radially adjustable between a radially widened unclamped position for inserting or removing the shaft (15) and a clamping position in which the clamping means (9) exert interference fit forces on the shaft (15) which maintain the frictional locking of the shaft (15) on the circular cylindrical outer peripheral surface (19) thereof, the clamping means (9) being assigned a clamping surface (17) having a circular cylindrical contour which lies flat on the outer peripheral surface (19) of the shaft (15) in the clamping position,
the region of the tool holder (1) forming the clamping surface (17) comprising a plurality of groove portions (21) that are curved around the axis of rotation and are at an axial distance from one another, which groove portions, when viewed in the direction of the axis of rotation (7), delimit supporting regions (25) therebetween which are integrally interconnected, arranged at an axial distance from one another and project towards the axis of rotation (7), the upper surfaces (27) of which, facing towards the axis of rotation (7), form the circular cylindrical clamping surface (17), **characterised in that**
either the groove portions (21) are provided in a inner peripheral surface of a radially resilient sleeve (31) which receives the shaft (15) of the rotation tool, which surface forms the circular cylindrically contoured clamping surface (17),
and the clamping means (9) comprise an additional clamping surface (29) that is radially adjustable between the unclamped position and the clamping position, the sleeve (31) being able to be inserted into the receiving opening or removed therefrom in the unclamped position of the clamping means (9), and/or the shaft (15) also being able to be inserted into or removed from the sleeve (31), and the sleeve (31) transferring the radial interference fit forces of the clamping means (9) to the shaft (15) in the clamping position,
or **in that** the groove portions (21) are moulded directly into the material of the receiving portion (5).

2. Tool holder according to claim 1,
**characterised in that** the groove portions (21) are formed by at least one helical groove curved around the axis of rotation (7) or by a plurality of annular grooves that are arranged at an axial distance from one another and surround the axis of rotation (7).

3. Tool holder according to claim 1,
**characterised in that** the region of the tool holder (1 h,i) forming the clamping surface (17h, i) comprises a plurality of supporting regions (25h, i) that are arranged at a distance from one another on all sides and are in the form of knobs which are separated from one another on all sides by the groove portions (21 h,k), yet integrally interconnected, the upper surfaces of which that project towards the axis of rotation (7h, i) forming the circular cylindrical clamping surface (17h,i).

4. Tool holder according to claim 3,
**characterised in that** the supporting regions (25h,i) are delimited along the clamping surface (17h,i) by at least two groups of groove portions (21h; 21i, 69), the groove portions (21h; 21i, 69) of each group extending beside one another at a distance inside the clamping surface without intersecting, and the groove portions (21h; 21i, 69) of different groups intersecting inside the clamping surface (17h,i) to form the supporting regions (25h,i).

5. Tool holder according to claim 4,
**characterised in that** the groove portions (21h') of a first group are formed by at least one helical groove curved around the axis of rotation and the groove portions (21h") of a second group are formed by at least one helical groove curved around the axis of rotation (7h) in the opposite direction to at least one helical groove of the first group or at a different pitch to the at least one helical groove of the first group and/or a plurality of annular grooves that are arranged at an axial distance from one another and surround the axis of rotation (7h) and/or a plurality of grooves that are arranged so as to be distributed in the peripheral direction of the clamping surface and extend axially.

6. Tool holder according to claim 4,
**characterised in that** the groove portions of a first group are formed by a plurality of annular grooves (21i) that are arranged at an axial distance from one another and surround the axis of rotation (7i), and the groove portions of a second group are formed by at least one helical groove curved around the axis of rotation and/or a plurality of grooves (69) that are arranged so as to be distributed in the peripheral direction of the clamping surface and extend axially.

7. Tool holder according to any of claims 1 to 6,
**characterised in that** the upper surface (27) of the supporting regions (25), when viewed in the longitudinal axial section of the receiving portion (5), together with groove side surfaces (23) that are axially laterally connected to the upper surface (27), result in a rectangular, parallelogrammical or trapezoidal contour.

8. Tool holder according to claim 7,
**characterised in that** at least one of the groove side surfaces (23) of a plurality of axially adjacent supporting regions (25), in particular both groove side surfaces (23), extends at right angles to the axis of rotation (7).

9. Tool holder according to either claim 7 or claim 8,
**characterised in that** at least one of the groove side surfaces (23a,b) of a plurality of axially adjacent supporting regions (25a,b), in particular both groove side surfaces (23a, b), have a conical shape.

10. Tool holder according to claim 9,
**characterised in that** both conical groove side surfaces (23a,b) of each supporting region (25a,b) of the plurality of axially adjacent supporting regions (25a,b) taper towards the axis of rotation (7a,b) in the same direction.

11. Tool holder according to claim 10,
**characterised in that** both conical groove side surfaces (23a,b) of each supporting region (25a,b) of the plurality of supporting regions (25a,b) taper away from the side of the tool.

12. Tool holder according to claim 10,
**characterised in that** the two groups are each provided with a plurality of axially adjacent supporting regions (23b, 23b'), the conical groove side surfaces (23b, 23b') of which taper in the same direction, the conical groove side surfaces (23ab, 23b') in the two groups tapering in opposite directions.

13. Tool holder according to claim 12,
**characterised in that** the conical groove side surfaces (23b, 23b') of the two groups taper towards one another.

14. Tool holder according to any of claims 1 to 13,
**characterised in that** the width of each groove portion (21) is less than the width of the upper surface (27) between adjacent groove portions (21).

15. Tool holder according to any of claims 1 to 14,
**characterised in that** the radial depth of each groove portion (21) is greater than the width of the groove portion (21) and/or the width of the upper surface (27).

16. Tool holder according to any of claims 1 to 15,
**characterised in that** the groove portions (21m) are filled with a material (71) that is different from the material of the region of the tool holder (1) forming the clamping surface (17m) at least over part of the longitudinal extension of said groove portions, but in particular substantially over the whole length of said groove portions.

17. Tool holder according to claim 16,
**characterised in that** the filler material (71) consists of plastics material, ceramic or metal.

18. Tool holder according to any of claims 1 to 17,
**characterised in that** the sleeve (31) comprises at least one axially extending expansion joint (35, 37), but preferably a plurality of expansion joints (35, 37) of this type, which are offset in the peripheral direction.

19. Tool holder according to claim 18,
**characterised in that** the at least one expansion joint is designed as an axially extending groove (35, 37) or as an axially extending slot (53) which radially penetrates the sleeve (31).

20. Tool holder according to claim 19,
**characterised in that** the sleeve (31) comprises, on the inner peripheral surface (17c) thereof, a plurality of axially extending grooves (35) that are distributed in the peripheral direction and comprises, on the outer peripheral surface (33) thereof, additional axially extending grooves (37) which are each arranged in the peripheral direction between one pair of grooves (35) in the inner peripheral surface (17c) in each case.

21. Tool holder according to any of claims 1 to 17,
**characterised in that** the sleeve (31) comprises two tubes (57, 59) arranged coaxially inside one another, of which the outer tube (57) has a conical inner surface (61) and of which the inner tube (59) has a conical outer surface (63) which abuts the conical inner surface (61), and a circular cylindrically contoured inner surface forming the clamping surface (17g) of the sleeve (31g), it being possible to change the inner diameter of said inner surface by axially moving the inner tube (59) and the outer tube (57) relative to one another until the clamping surface (17g) comes into contact with the shaft (15g).

22. Tool holder according to claim 21,
**characterised in that** at least the inner tube (59), preferably also the outer tube (57), comprises at least one axially extending expansion joint, but preferably a plurality of expansion joints of this type distributed in the peripheral direction.

23. Tool holder according to claim 22,
**characterised in that** the at least one expansion joint is designed as an axially extending groove or as an axially extending slot which radially penetrates the tubes (57, 59).

24. Tool holder according to claim 23,
**characterised in that** at least the inner tube (59) comprises a plurality of axially extending grooves distributed in the peripheral direction on its inner peripheral surface (17g) and comprises additional axially extending grooves on its outer peripheral surface (63) which are each arranged in the peripheral direction between one pair of grooves in the inner peripheral surface (17g) in each case.

25. Tool holder according to any of claims 1 to 24,
**characterised in that** the additional clamping surface of the clamping means (9d, e, f) is designed as a conical inner surface (29d,e,f) and the sleeve (31d,e,f,) has a conical outer surface (33d,e,f) which abuts the conical inner surface (29d,e,f) and tapers towards the rotation tool in the direction of the axis of rotation (7d,e,f) in a manner corresponding to the conical inner surface (29d,e,f),
and **in that** the sleeve (31d,e,f) is axially supported on the tool holder on the side of the region of the clamping surface (17d,e,f) thereof which axially faces the rotation tool.

26. Tool holder according to claim 25,
**characterised in that** the tool holder (1d,e,f) comprises a tube portion (9d,e,f) which forms the conical inner surface (29d,e,f) of the additional clamping surface and can be moved into the unclamped position by heating and into the clamping position by cooling to form the clamping means, which tube portion surrounds the conical outer surface (33d,e,f) of the sleeve (31d,e,f) and is rigidly connected to the tool holder (1d,e,f) on the side of the clamping surface (17d,e,f), formed by the inner peripheral surface of the sleeve (31d,e,f), which axially faces away from the rotation tool.

27. Tool holder according to claim 26,
**characterised in that** the tube portion (9e,f), on the side which axially faces away from the rotation tool, comprises an extension (41, 41f) which, at a radial distance, surrounds the tool holder (1e,f) and/or the sleeve (31e,f) and axially extends over the region which forms the additional clamping surface (29,e,f), the end region of which extension is rigidly connected to the tool holder (1e,f), and/or **in that** the tube portion (9e,f) consists of a material of which the thermal expansion coefficient is greater than the thermal expansion coefficient of the sleeve (31e,f) and/or of the region of the tool holder (1e,f) which is surrounded by the tube portion (9e,f).

28. Tool holder according to claim 27,
**characterised in that** the tube portion (9e,f) is welded to the tool holder (1e,f).

29. Tool holder according to either claim 27 or claim 28,
**characterised in that** the end of the sleeve (31f) which axially faces away from the rotation tool is rigidly connected, in particular welded, to the tool holder (1f).

## Revendications

1. Porte-outil, dont la section de réception (5) comprend des moyens de serrage (9) prévus pour le maintien d'un manche (15) d'un outil rotatif de manière centrée par rapport à un axe de rotation (7) du porte-outil (1), lesquels moyens de serrage définissent une ouverture de réception (13) pour le manche (15), dans lequel les moyens de serrage (9) peuvent être ajustés de manière radiale entre une position de desserrage radialement élargie servant à insérer ou à retirer le manche (15) et une position de serrage, dans laquelle les moyens de serrage (9) exercent sur le manche (15) des forces d'ajustement serré radiales maintenant à friction le manche (15) au niveau de sa surface périphérique (19) extérieure cylindrique creuse, dans lequel est associée aux moyens de serrage (9), une surface de serrage (17) avec un contour cylindrique circulaire, laquelle repose, dans la position de serrage, à plat au niveau de la surface périphérique (19) extérieure du manche (15),
dans lequel la zone, formant la surface de serrage (17), du porte-outil (1) présente une pluralité de sections de rainure (21) incurvées tout autour de l'axe de rotation à une distance axiale les unes des autres, lesquelles sections de rainure délimitent, vues en direction de l'axe de rotation (7), entre elles des zones d'appui (25) reliées les unes aux autres d'un seul tenant et disposées à une distance axiale les unes des autres, faisant saillie en direction de l'axe de rotation (7), dont les surfaces de toit/supérieures (27) placées en direction de l'axe de rotation (7) forment la surface de serrage (17) cylindrique circulaire,
**caractérisé en ce que**
soit les sections de rainure (21) sont prévues dans une surface périphérique intérieure, formant la surface de serrage (17) contourée de manière cylindrique creuse, d'une douille (31) radialement élastique, recevant le manche (15) de l'outil rotatif,
et les moyens de serrage (9) présentent une autre surface de serrage (29) pouvant être ajustée de manière radiale entre la position de desserrage et la position de serrage, dans lequel dans la position de desserrage des moyens de serrage (9), d'une part la douille (31) peut être insérée dans l'ouverture de réception ou en être retirée et/ou d'autre part le manche (15) peut être inséré dans la douille (31) ou en être retiré et dans la position de serrage, la douille (31) transmet sur le manche (15) les forces d'ajustement serré radiales des moyens de serrage (9),
soit que les sections de rainure (21) sont moulées directement dans le matériau de la section de réception (5).

2. Porte-outil selon la revendication 1,
**caractérisé en ce que** les sections de rainure (21) sont formées par au moins une rainure hélicoïdale incurvée tout autour de l'axe de rotation (7) ou par une pluralité de rainures annulaires disposées à une distance axiale les unes des autres, entourant l'axe de rotation (7).

3. Porte-outil selon la revendication 1,
**caractérisé en ce que** la zone, formant la surface de serrage (17h, i), du porte-outil (1h, i) présente une pluralité de zones d'appui (25h, i) disposées de tous les côtés à une distance donnée les unes des autres, se présentant sous la forme de bosses séparées les unes des autres de tous les côtés par les sections de rainure (21h, k), reliées toutefois les unes aux autres d'un seul tenant, dont les surfaces de toit faisant saillie en direction de l'axe de rotation (7h, i) forment la surface de serrage (17h, i) cylindrique creuse.

4. Porte-outil selon la revendication 3,
**caractérisé en ce que** les zones d'appui (25h, i) sont délimitées le long de la surface de serrage (17h, i) par au moins deux groupes de sections de rainure (21h ; 21i, 69), dans lequel les sections de rainure (21h ; 21i, 69) de chaque groupe s'étendent à l'intérieur de la surface de serrage les unes à côté des autres à distance sans se croiser et les sections de rainure (21h ; 21i, 69) de différents groupes se croisent à l'intérieur de la surface de serrage (17h, i) afin de former les zones d'appui (25h, i).

5. Porte-outil selon la revendication 4,
**caractérisé en ce que** les sections de rainure (21h') d'un premier groupe sont formées par au moins une rainure hélicoïdale incurvée tout autour de l'axe de rotation et les sections de rainure (21h") d'un deuxième groupe sont formées par au moins une rainure hélicoïdale incurvée tout autour de l'axe de rotation (7h) en sens inverse par rapport à au moins une rainure hélicoïdale du premier groupe ou avec un pas autre que l'au moins une rainure hélicoïdale et/ou par une pluralité de rainures annulaires entourant l'axe de rotation (7h), disposées à une distance axiale les unes des autres et/ou par une pluralité de rainures disposées de manière répartir dans la direction périphérique de la surface de serrage, s'étendant de manière axiale.

6. Porte-outil selon la revendication 4,
**caractérisé en ce que** les sections de rainure d'un premier groupe sont formées par une pluralité de rainures annulaires (21i) entourant l'axe de rotation (7i), disposées à une distance axiale les unes des autres et les sections de rainure d'un deuxième groupe sont formées par au moins une rainure hélicoïdale incurvée tout autour de l'axe de rotation et/ou par une pluralité de rainures (69) disposées de manière répartie dans la direction périphérique de la surface de serrage, s'étendant de manière axiale.

7. Porte-outil selon l'une quelconque des revendications 1 à 6,
**caractérisé en ce que** la surface de toit (27) des zones d'appui (25) suivent, vues dans la coupe longitudinale axiale de la section de réception (5), conjointement avec des surfaces latérales de rainure (23) situées dans le prolongement latéralement de la surface de toit (27), un contour de rectangle ou un contour de parallélogramme ou un contour de trapèze.

8. Porte-outil selon la revendication 7,
**caractérisé en ce qu'**au moins une des surfaces latérales de rainure (23) d'une pluralité de zones d'appui (25) adjacentes de manière axiale, en particulier deux surfaces latérales de rainure (23), s'étendant à angle droit par rapport à l'axe de rotation (7).

9. Porte-outil selon la revendication 7 ou 8,
**caractérisé en ce qu'**au moins une des surfaces latérales de rainure (23a, b) d'une pluralité de zones d'appui (25a, b) adjacentes de manière axiale, en particulier deux surfaces latérales de rainure (23a, b), ont une forme de cône.

10. Porte-outil selon la revendication 9,
**caractérisé en ce que** les deux surfaces latérales de rainure (23a, b) coniques de chaque zone d'appui (25a, b) de la pluralité de zones d'appui (25a, b) adjacentes de manière axiale se rétrécissent dans le même sens en direction de l'axe de rotation (7a, b).

11. Porte-outil selon la revendication 10,
**caractérisé en ce que** les deux surfaces latérales de rainure (23a, b) coniques de chaque zone d'appui (25a, b) de la pluralité de zones d'appui (25a, b) adjacentes de manière axiale se rétrécissent dans une direction s'éloignant du côté de l'outil.

12. Porte-outil selon la revendication 10,
**caractérisé en ce que** les deux groupes sont prévus avec respectivement une pluralité de zones d'appui (23b, 23b') adjacentes de manière axiale, dont les surfaces latérales de rainure (23b, 23b') en forme de cône se rétrécissent dans le même sens, dans lequel les surfaces latérales de rainure (23ab, 23b') en forme de cône se rétrécissent dans les deux groupes en sens inverse.

13. Porte-outil selon la revendication 12,
**caractérisé en ce que** les surfaces latérales de rainure (23b, 23b') en forme de cône des deux groupes se rétrécissent en direction les unes des autres.

14. Porte-outil selon l'une quelconque des revendications 1 à 13,
**caractérisé en ce que** la largeur de chaque section de rainure (21) est inférieure à la largeur de la surface de toit (27) entre des sections de rainure (21) adjacentes.

15. Porte-outil selon l'une quelconque des revendications 1 à 14,
**caractérisé en ce que** la profondeur radiale de chaque section de rainure (21) est plus grande que la largeur de la section de rainure (21) et/ou que la largeur de la surface de toit (27).

16. Porte-outil selon l'une quelconque des revendications 1 à 15,
**caractérisé en ce que** les sections de rainure (21m) sont remplies, au moins sur une partie de leur extension longitudinale, en particulier toutefois sensiblement sur toute leur longueur, d'un matériau (71) différent du matériau de la zone, formant la surface de serrage (17m), du porte-outil (1m).

17. Porte-outil selon la revendication 16,
**caractérisé en ce que** le matériau de remplissage (71) est constitué de plastique ou de céramique ou de métal.

18. Porte-outil selon l'une quelconque des revendications 1 à 17,
**caractérisé en ce que** la douille (31) présente de manière décalée dans la direction périphérique au moins un joint de compensation (35, 37) s'étendant de manière axiale, de préférence toutefois plusieurs joints de compensation (35, 37) de ce type.

19. Porte-outil selon la revendication 18,
**caractérisé en ce que** l'au moins un joint de compensation est réalisé sous la forme d'une rainure (35, 37) s'étendant de manière axiale ou sous la forme d'une entaille (53) s'étendant de manière axiale, traversant de manière radiale la douille (31).

20. Porte-outil selon la revendication 19,
**caractérisé en ce que** la douille (31) présente, sur sa surface périphérique (17c) intérieure, de manière renfoncée dans la direction périphérique, plusieurs rainures (35) s'étendant de manière axiale et, sur sa surface périphérique (33) extérieure, d'autres rainures (37) s'étendant de manière axiale, qui sont disposées dans la direction périphérique entre respectivement une paire de rainures (35) de la surface périphérique (17c) intérieure.

21. Porte-outil selon l'une quelconque des revendications 1 à 17,
**caractérisé en ce que** la douille (31) comprend deux manchons (57, 59) disposés l'un dans l'autre de manière coaxiale, dont le manchon (57) extérieur a une surface intérieure (61) conique et dont le manchon (59) intérieur a une surface extérieure (63) conique reposant au niveau de la surface intérieure (61) conique et une surface intérieure formant la surface de serrage (17g) de la douille (31g), contourée de manière cylindrique creuse, dont le diamètre intérieur peut être modifié par un coulissement axial du manchon (59) intérieur et du manchon (57) extérieur l'un par rapport à l'autre jusqu'à ce que la surface de serrage (17g) vienne en appui au niveau du manche (15g).

22. Porte-outil selon la revendication 21,
**caractérisé en ce qu'**au moins le manchon (59) intérieur, de préférence également le manchon (57) extérieur, présente de manière répartie dans la direction périphérique au moins un joint de compensation s'étendant de manière axiale, de préférence toutefois plusieurs joints de compensation de ce type.

23. Porte-outil selon la revendication 22,
**caractérisé en ce que** l'au moins un joint de compensation est réalisé sous la forme d'une rainure s'étendant de manière axiale ou sous la forme d'une entaille s'étendant de manière axiale, traversant de manière radiale le manchon (57, 59).

24. Porte-outil selon la revendication 23,
**caractérisé en ce qu'**au moins le manchon (59) intérieur présente, sur sa surface périphérique (17g) intérieure, de manière répartie dans la direction périphérique, plusieurs rainures s'étendant de manière axiale et, sur sa surface périphérique (63) extérieure, d'autres rainures s'étendant de manière axiale, qui sont disposées dans la direction périphérique entre respectivement une paire de rainures de la surface périphérique (17g) intérieure.

25. Porte-outil selon l'une quelconque des revendications 1 à 24,
**caractérisé en ce que** l'autre surface de serrage des moyens de serrage (9d, e, f) est réalisée sous la forme d'une surface intérieure (29d, e, f) conique et la douille (31d, e, f) a une surface extérieure (33d, e, f) conique reposant au niveau de la surface intérieure (29d, e, f) conique, laquelle se rétrécit vers l'outil rotatif dans la direction de l'axe de rotation (7d, e, f) de manière conforme à la surface intérieure (29d, e, f) conique,
et que la douille (31d, e, f) prend appui de manière axiale au niveau du porte-outil sur le côté, opposé axialement à l'outil rotatif, de la zone de sa surface de serrage (17d, e, f).

26. Porte-outil selon la revendication 25,
**caractérisé en ce que** le porte-outil (1d, e, f) présente, afin de former les moyens de serrage, une section de manchon (9d, e, f) pouvant être transféré par réchauffement dans la position de desserrage et par refroidissement dans la position de serrage, formant la surface intérieure (29d, e, f) conique de l'autre surface de serrage, laquelle section de manchon entoure la surface extérieure (33d, e, f) conique de la douille (31d, e, f) et est reliée de manière solidaire au porte-outil (1d, e, f) sur le côté, opposé axialement à l'outil rotatif, de la surface de serrage (17d, e, f) formée par la surface périphérique intérieure de la douille (31d, e, f).

27. Porte-outil selon la revendication 26,
**caractérisé en ce que** la section de manchon (9e, f) présente, sur le côté opposé axialement à l'outil rotatif, un prolongement (41, 41f) dépassant axialement au-delà de la zone formant l'autre surface de serrage (29e, f), entourant le porte-outil (1e, f) et/ou la douille (31e, f) avec une distance radiale, la zone d'extrémité duquel prolongement étant reliée de manière solidaire au porte-outil (1e, f), et/ou que la section de manchon (9e, f) est constituée d'un matériau, dont le coefficient de dilatation thermique est plus grand que le coefficient de dilatation thermique de la douille (31e, f), et/ou de la zone, entourée par la section de manchon (9e, f) du porte-outil (1e, f).

28. Porte-outil selon la revendication 27,
**caractérisé en ce que** la section de douille (9e, f) est soudée au porte-outil (1e, f).

29. Porte-outil selon la revendication 27 ou 28,
**caractérisé en ce que** l'extrémité, opposée axialement à l'outil rotatif, de la douille (31f) est reliée, en particulier est soudée, de manière solidaire au porte-outil (1f).
